# EUROPEAN PATENT SPECIFICATION

(11) **EP 1 997 922 B1**
(45) Date of publication and mention of the grant of the patent: **13.06.2012**
(21) Application number: 06833961.3
(22) Date of filing: 05.12.2006
(51) Int. Cl.: C22C 19/03, C22C 14/00, F01D 25/00, F03G 7/06, C22F 1/00, C22F 1/10, C22F 1/18, C22C 27/02

(54) **HIGH-TEMPERATURE SHAPE MEMORY ALLOY, ACTUATOR AND MOTOR**
HOCHTEMPERATUR-FORMGEDÄCHTNISLEGIERUNG, STELLGLIED UND MOTOR
ALLIAGE A MEMOIRE DE FORME HAUTE TEMPERATURE, ACTIONNEUR ET MOTEUR ASSOCIES

(30) Priority: 20.03.2006 JP 2006076560
(43) Date of publication of application: 03.12.2008
(73) Proprietor: University of Tsukuba, Ibaraki 3058577 (JP)
(72) Inventor: MIYAZAKI, Shuichi, Tsukuba-shi Ibaraki 305-8577 (JP); KIM, Heeyoung, Ibaraki 305-8577 (JP); TAKEDA, Yoshinari, Tsukuba-shi Ibaraki 305-8577 (JP); TOMOZAWA, Masanari, Tsukuba-shi Ibaraki 305-8577 (JP); PIO, Buenconsejo, Tsukuba-shi Ibaraki 305-8577 (JP)
(74) Representative: BRP Renaud & Partner
(86) International application number: PCT/JP2006/324206
(87) International publication number: WO 2007/108180

(56) References cited:
- EP-A1- 0 484 805
- JP-A- 03 219 037
- JP-A- 10 008 168
- JP-A- 58 157 934
- JP-A- 59 028 548
- JP-A- 60 026 648
- JP-A- 62 037 353
- JP-A- 63 013 898
- JP-A- 63 096 234

## Description

### Technical field

The present invention relates to a high temperature shape memory alloy which can be used at high temperature in excess of 100°C, as well as an actuator and a motor using the said shape memory alloy.

More particularly, the present invention relates to a high temperature shape memory alloy with a peak and reverse martensite transformation temperature higher than 100°C, as well as an actuator and a motor using the said shape memory alloy.

### Background of the invention

Ti- Ni base alloys are widely known shape memory alloys consisting of Titanium (Ti) and Nickel(Ni) which reverts back to its original configuration upon application of heat up to its prescribed operating temperature, therefore, to remember their original shape.

For example, Ti-Ni-Cu alloys are generally known to exhibit shape memory effect at temperature in the range of 200K to 360K (Patent document.1, Kokai publication Tokukai No. 2002-294371). In addition, Ti-Ni-Nb alloys with martensite start temperature (Ms) below 50°C has also been disclosed (Patent doc.2, Patent publication No. 2539786).

However, in the commercial Ti-Ni alloys including the alloys described in the above patent documents 1 and 2, the peak transformation temperature (M *) is below 70°C(343K), in the meanwhile the reverse peak transformation temperature (A*) is below 100°C (373K), therefore the operating temperature of shape memory alloy does not exceed 100°C. Accordingly, conventional Ti-Ni base alloys are difficult for high temperature operation as shape memory alloys.

The below mentioned alloys are generally well known as high temperature shape memory alloys obtained by adding additive elements to the said Ti-Ni base alloys for operation at high temperature exceeding 100°C.

### (1) (Ti-Zr)-Ni alloys

In the (Ti-Zr)-Ni base alloy, Titanium is substituted by 0-20 mol% (atomic percent) Zirconium (Zr) to obtain a corresponding martensite start temperature (Ms) in the range of 373(K) to 550(K).

### (2) (Ti-Hf)-Ni alloys

In the (Ti-Hf)-Ni base alloy, Titanium is substituted by 0-20 mol% Hafnium (Hf) to obtain a corresponding martensite start temperature (Ms) in the range of 373(K) to 560(K).

### (3) Ti-(Ni-Pd) alloys

In the Ti-(Ni-Pd) base alloy, Nickel is substituted by 0-50 mol% Palladium (Pd) to obtain a corresponding martensite start temperature (Ms) from 280(K) to 800(K).

### (4) Ti-(Ni-Au) alloys

In the Ti-(Ni-Au) base alloy, Nickel(Ni) is substituted by 0-50 mol% Gold(Au) to obtain a corresponding martensite start temperature (Ms) from 300(K) to 850(K).

### (5) Ti-(Ni-Pt) alloys

In the Ti-(Ni-Pt) base alloy, Nickel is substituted by 0-50 mol% Platinium(Pt) to obtain a corresponding martensite start temperature (Ms) from 280(K) to 1300(K).

### (6) Ti-Al alloys

In the Ni-Al base alloys comprising 30-36 mol% Aluminum(Al) and the balance Nickel(Ni), a corresponding martensite start temperature (Ms) in the range of 273(K) to 1000(K) is obtained.

### (7) Ti-Nb alloys

In the Ti-Nb alloys comprising 10-28 mol% Niobium (Nb) and the balance Titanium (Ti), a corresponding martensite start temperature (Ms) in the range of 173(K) to 900(K) is obtained.

### (8) Ti-Pd alloys ( described in patent document 3, Kokai publication Tokukai No. Hei 11-36024)

As described in Patent document 3 , Ti- Pd base alloys comprising 48at%-50at% palladium (Pd) and 50at%-52 at% Ti possesses a reverse transformation finish temperature (Af) in excess of 560°C (833K).

### (9) Ti-Ta alloys ( alloys described in Non-patent document. 1)

As described in Non-Patent document 1, alloys comprising Tantalum 50 mass% (less than 30mol% if converted to mol percentage) and the balance Titanium, or Ti-Ta based alloys with 4 mass% Tin (Sn) or 410 mass% Zircon (Zr) molten into, possess a shape recovery start temperature in excess of 150°C (423K).
Patent document 1: Kokai publication Tokukai No. 2002-294371
Patent document 2: Patent publication No. 2539786
Patent document 3: Kokai publication Tokukai No. Hei 11-36024
Non-patent document 1 Masahiko Ikeda, Shin-ya Komatsu and Yuichiro Nakamura, Effects of Sn and Zr Additions on Phase Constitution and Aging Behavior Ti-50 mass% Ta Alloys Quenched from β Singe Phase Region, Materials Transactions, The Japan Instiute of Metals, page 1106-1112, issue 4, volume 45, 2004.

### Summary of the invention

### Subject of the invention

### (Problem to be solved)

The conventional high temperature shape memory alloys No.1 and 2 described above are brittle thus break easily, which results in poor machinability leading to failure in cold working.

In the said shape memory alloys No.3 ∼ 5 and 8, in addition to poor machinability, addition of high price additive elements (Pd, Au, Pt) increase the cost then make the alloys quite expensive.

With respect to the said shape memory alloy No.6, in addition to poor machinability, precipitation of Ni₅Al₃ weakens the structure stability and embrittle the alloy, therefore, repeated operation at over 200°C is impossible, that is to say, it does not exhibit shape memory effect.

For the above-mentioned shape memory alloy No.7, even though with good machinability, formation of ω phase which results in poor structure stability and causes the loss of shape memory property at over 100°C lowers the transformation temperature therefore it fails for repeated operation, that is to say, it does not exhibit shape memory effect.

For the above-mentioned shape memory alloy No.9, it fails for repeated operation due to easiness in plastic deformation. Furthermore, easy formation of ω phase during operation results in loss of shape memory property.

As a result, based on the conventional high temperature shape memory technology described in alloys (1) and (2) , the inventors carried out the below-described invention through large amount of experiments and research work in order to improve machinability of Ti-Ni-Zr alloys and Ti-Ni-Hf alloys.

Accordingly, the present invention addresses the problems of the prior art and provide a high temperature shape memory alloy which has good machinability and in the meanwhile, suitable for repeated high temperature operation.

### Means to solve the problem

### (The present invention)

### (Invention 1)

The high temperature shape memory alloy in invention 1 to solve the said technical problem, wherein said alloy consists of 34.7mol%-48.5 mol% Nickel; and at least one of Zircon or Hafnium as transformation temperature increasing additive element, with its total content of 6.8mol%-22.5mol%; and at least one of Niobium or Tantalum as machinability improving additive element, with its total content of 1mol%-30mol%; and Boron below 2 mol%; and the balance Titanium; and unavoidable impurity.

### (The function of invention 1)

With respect to the high temperature shape memory alloy having the said components in Invention 1, since the said alloy consists of 34.7mol%- 48.5 mol% Nickel; and at least one of Zircon or Hafnium as transformation temperature increasing additive element, with its total content of 6.8mol%-22.5mol%; and at least one of Niobium or Tantalum as machinability improving additive elements, with its total content of 1mol%-30mol%; and Boron below 2 mol%; and the balance Titanium, high transformation temperature (peak transformation temperature (M*) or peak reverse transformation temperature (A*)) in excess of 100°C is obtained, and cold ductility is also improved. Consequently, it provides a high temperature shape memory alloy for repeated high temperature operation with improved cold working machinability.

In addition, in the scope defined in the description of the application as well as the Claims, the description of 'Boron below 2 mol%' also includes the case of '0mol% Boron', namely no addition of Baron.

### (Form 1 of Invention 1)

The high temperature shape memory alloy of form 1 in invention 1 as described in said Invention 1, wherein said alloy consists of 6.8mol%-22.5mol% Zircon as said transformation temperature increasing additive elements; and 3mol%-30mol% Niobium as said machinability improving additives.

### (Function of Form 1 of Invention 1)

In the high temperature shape memory alloy of Form I in Invention 1 having the said components, since the said alloy consists of 6.8mol%-22.5mol% Zircon and 3mol%-30mol% Niobium, high peak reverse transformation temperature (A*) in excess of 100°C is obtained, in the meanwhile, cold working can be performed with high ductility.

### (Form 2 of Invention 1)

The high temperature shape memory alloy of form 2 in invention 1 as described in said Invention 1, wherein said alloy consists of 6.8mol%-18mol% Hafnium as said transformation temperature increasing additive elements; and 3mol%-20mol% Niobium as said machinability improving additive elements.

### (Function of Form 2 of Invention 1)

In the high temperature shape memory alloy of Form 2 in Invention 1 having the said components, since the said alloy consists of 6.8mol%-18mol% Hafnium and 3mol%-20mol% Niobium, high peak reverse transformation temperature (A*) in excess of 100°C is obtained, in the meanwhile, cold working can be performed with improved ductility.

### (Form 3 of Invention 1)

The high temperature shape memory alloy of form 3 in invention 1 as described in said Invention 1, wherein said alloy consists of 6.8mol%-20mol% said transformation temperature increasing additive elements; and 3mol%-30mol% Tantalum as said machinability improving additive elements.

### (Function of Form 3 of Invention 1)

In the high temperature shape memory alloy of Form 2 in Invention 1 having the said components, since the said alloy consists of 6.8mol%-20mol% said transformation temperature increasing additive elements; and 3mol%-30mol% Tantalum as said machinability improving additive elements, machinability is improved compared with the case while no Tantalum is added.

### (Form 4 of Invention 1)

The high temperature shape memory alloy of Form 4 in Invention 1 with respect to either of the said invention 1 or form 3 of invention 1, wherein the mol ratio of Titanium plus Zircon and Hafnium to Nickel is in the range of 0.98 to 1.14.

### (Function of Form 4 of Invention 1)

In the high temperature shape memory alloy of Form 4 in Invention 1 having the said components, since the mol ratio of Titanium plus Zircon and Hafnium to Nickel is in the range of 0.98 to 1.14, high peak reverse transformation temperature (A*) in excess of 100°C is obtained; and in the meanwhile, cold working can be performed with high ductility.

### (Invention 2)

An actuator in Invention 2 to solve the above-mentioned technical problem, wherein the said actuator is made of the high temperature shape memory alloys described in either the said invention 1 or form 1 through 4 of invention 1.

### (The function of invention 2)

In the actuator in Invention 2 having the said components, since the said actuator is made of the high temperature shape memory alloy of either the said invention 1 or form 1 through 4 of invention 1, it is capable to perform cold working, and in addition, high temperature application is possible with the help of its high transformation temperature and shape memory effect.

### (Invention 3)

A motor in Invention 3 to solve the above-mentioned technical problem, wherein the said motor possesses a flux adjustment valve made of the high temperature shape memory alloys defined in either the said invention 1 or form 1 through 4 of invention 1.

### (The function of invention 3)

In the motor in Invention 3 having the said components, since the said motor possesses a flux adjustment valve made of the high temperature shape memory alloys defined in either the said invention 1 or form 1 through 4 of invention 1, high temperature operation can be performed with high transformation temperature and shape memory effect.

### (The effect of invention)

The present invention as mentioned above provides shape memory alloys capable of repeated high temperature operation with high machinability.

### Brief description of drawings

(Fig.1) Fig.1 shows a scanning electron microscope image of alloy No.7 in embodiment of the present invention
(Fig.2) Fig.2 shows a scanning electron microscope image of alloy No.8 in embodiment of the present invention

### Detailed description of preferred embodiments

The following embodiments are described to explain the present invention.

### (embodiment)

As embodiments and comparative examples of the present invention, 55 Alloy specimens Nos. 1 to 55 were provided as shown in Tables 1 to 10, and corresponding experiments were carried out. Specimens were prepared by means of the below described process including steps (1) to (3).
(1) Each metallic element is measured by mol%, and then molten by means of arc melting method to make alloy ingots. Namely, alloy No.2 (Ti-NL)_{49.5}-Zr₁₀) has a composition expressed as 49.5mol% Ni, 10mol% Zr and the balance Ti (40.5mol%).
(2) The resultant alloy ingots are subjected to homogenization heat treatment for 2 hours (7.2ks) at 950°C.
(3) Billets (test piece) of 15mm long, 10mm wide and 1mm thick are cut off by means of electric discharge machining.

### (Machinability evaluation test)

Machinability evaluation test was carried out to evaluate machinability of the alloys manufactured by means of the above mentioned method. Machinability evaluation test was carried out through cold rolling at deformation up to 60%. The break rolling ratio of test pieces with test pieces breaking down at deformation up to 60% was measured to evaluate machinability.

### (Transformation temperature measurement test)

In this test, cold rolling test pieces were heat-treated for 1 hour at 700°C to measure martensite peak transformation temperature (M *) and peak reverse transformation temperature (A*) of each alloy by means of Differential Scanning Calorimetry (DSC).

As comparative examples, the composition of well known ternary Ti-Ni-Zr alloys Nos. 1 to 4, along with the mol ratio of Ti plus Zr to Ni, break rolling ratio (%), martensite peak transformation temperature (M *,°C) and peak reverse transformation temperature (A*,°C) is provided in Table 1.

**Table 1. Machinability of Ti-Ni-Zr alloys and transformation temperature**

| | No. | composition | Component (mol%) | | | | (Ti+Zr)/Ni | Break rolling ratio(%) | transformation temperature | |
|---|---|---|---|---|---|---|---|---|---|---|
| | | | Ti | Ni | Zr | Nb | | | M* | A* |
| Comparative example | 1 | Ti-Ni_{49.5}-Zr₇ | balance | 49.5 | 7 | - | 1.02 | 42 | 81 | 132 |
| | 2 | Ti-Ni_{49.5}-Zr₁₀ | balance | 49.5 | 10 | - | 1.02 | 30 | 102 | 155 |
| | 3 | Ti-Ni_{49.5}-Zt₁₅ | balance | 49.5 | 15 | - | 1.02 | 10 | 179 | 219 |
| | 4 | Ti-Ni_{49.5}-Zr₂₀ | balance | 49.5 | 20 | - | 1.02 | 9 | 270 | 325 |

As embodiments of the present invention, the composition of quaternary Ti-Ni-Zr-Nb alloys Nos. 5 to 7, along with the mol ratio of Ti plus Zr to Ni, break rolling ratio (%), martensite peak transformation temperature (M*,°C) and peak reverse transformation temperature (A*,°C) is shown respectively in Table 2.

Furthermore, alloys No.5-7 are derived by fixing Ti and Zr content ( mol%) of alloy No.3, and then substituting Ni content by Nb.

**Table 2. Machinability of Ti-Ni-Zr-Nb alloys and transformation temperature**

| | No. | composition | Component(mol%) | | | | (Ti+Zr)/Ni | Break rolling ratio(%) | transformation temperature | |
|---|---|---|---|---|---|---|---|---|---|---|
| | | | Ti | Ni | Zr | Nb | | | M* | A* |
| Embodiment | 5 | Ti-N_{48.5}-Zr₁₅Nb₁ | balance | 48.5 | 15 | 1 | 1.04 | 17 | 149 | 190 |
| | 6 | Ti-Ni_{46.5}-Zr₁₅-Nb₃ | balance | 46.5 | 15 | 3 | 1.09 | 50 | 140 | 184 |
| | 7 | Ti-Ni_{44.5}-Zr₁₅-Nb₅ | balance | 44.5 | 15 | 5 | 1.14 | 46 | 131 | 171 |

As embodiments and comparative examples of the present invention, the composition of quaternary Ti-Ni-Zr-Nb alloys Nos. 8 to 12, along with the mol ratio of Ti plus Zr to Ni, break rolling ratio (%), martensite peak transformation temperature (M*,°C) and peak reverse transformation temperature (A*, °C) is shown respectively in Table 3.

Furthermore, alloys No.8-12 are derived by fixing mol ratio of Ti ,Ni and Zr to 35.5mol%, 49.5% and 15mol% respectively, and then substituting Ti, Ni, and Zr as a whole by Nb.

**Table 3. Machinability of Ti-Ni-Zr-Nb alloys and transformation temperature**

| | No. | Composition | Component(mol%) | | | | (Ti+Zr)/Ni | Break rolling ratio(%) | transformation temperature | |
|---|---|---|---|---|---|---|---|---|---|---|
| | | | Ti | Ni | Zr | Nb | | | M* | A* |
| Embodiment | 8 | (Ti-Ni_{49.5}-Zr₁₅)₉₅-Nb₅ | balance | 47.0 | 14.3 | 5 | 1.02 | 35 | 134 | 180 |
| | 9 | (Ti-Ni_{49.5}-Zr₁₅)₉₀-Nb₁₀ | balance | 44.6 | 13.5 | 10 | 1.02 | Over 60 | 110 | 162 |
| | 10 | (Ti-Ni_{49.5}-Zr₁₅)₈₀-Nb₂₀ | balance | 39.6 | 12.0 | 20 | 1.02 | Over 60 | 90 | 139 |
| | 11 | (Ti-Ni_{49.5}-Zr₁₅)₇₀-Nb₃₀ | balance | 34.7 | 10.5 | 30 | 1.02 | Over 60 | 72 | 122 |
| Comparative example | 12 | (Ti-Ni_{49.5}-Zr₁₅)₉₉-Nb₁ | balance | 49.0 | 14.9 | 1 | 1.02 | 10 | 157 | 198 |

As embodiments and comparative examples of the present invention, the composition of quaternary Ti-Ni-Zr-Nb alloys Nos. 13 to 17, along with the mol ratio of Ti plus Zr to Ni, break rolling ratio (%), martensite peak transformation temperature (M*,°C) and peak reverse transformation temperature (A*, °C) is shown respectively in Table 4.

Additionally, with regard to the alloys No. 16 and 17, since the transformation temperature is not identified in the experiment, it can be concluded that transformation temperature is too low to be observed.

**Table 4. Machinability of Ti-Ni-Zr-Nb alloys and transformation temperature**

| | No. | composition | Component(mol%) | | | | (Ti+Zr)/Ni | Break rolling ratio(%) | transformation temperature | |
|---|---|---|---|---|---|---|---|---|---|---|
| | | | Ti | Ni | Zr | Nb | | | M* | A* |
| Embodiment | 13 | (Ti-Ni_{50.5}-Zr₁₅)₉₀-Nb₁₀ | balance | 45.5 | 13.5 | 10 | 0.98 | Over 60 | 74 | 121 |
| | 14 | (Ti-Ni_{48.5}-Zr₁₅)₉₅-Nb₅ | balance | 46.1 | 14.3 | 5 | 1.06 | 23 | 132 | 177 |
| | 15 | (Ti -Ni₅₀.₅-Zr₁₅)₉₅-Nb₅ | balance | 48.0 | 14.3 | 5 | 0.98 | 30 | 104 | 145 |
| Comparative example | 16 | (Ti-Ni_{55.0}-Zr₁₅)₉₀-Nb₁₀ | balance | 49.5 | 13.5 | 10 | 0.82 | 5 | - | - |
| | 17 | (Ti-Ni_{35.0}-Zr₁₅)₉₀-Nb₁₀ | balance | 31.5 | 13.5 | 10 | 1.86 | 8 | - | - |

As embodiments and comparative examples of the present invention, the composition of quaternary Ti-Ni-Zr-Nb alloys Nos. 18 to 26, as well as the mol ratio of Ti plus Zr to Ni, break rolling ratio (%), martensite peak transformation temperature (M*,°C) and peak reverse transformation temperature (A*, °C) is shown respectively in Table 5.

**Table 5. Machinability of Ti-Ni-Zr-Nb alloys and transformation temperature**

| | No. | Composition | Content(mol%) | | | | (Ti+Zr)/Ni | Break rolling ratio(%) | transformation temperature | |
|---|---|---|---|---|---|---|---|---|---|---|
| | | | Ti | Ni | Zr | Nb | | | M* | A* |
| Embodiment | 18 | (Ti-Ni_{49.5}-Zr₁₀)₉₅-Nb₅ | balance | 47.0 | 9.5 | 5 | 1.02 | Over 60 | 52 | 124 |
| | 19 | (Ti-Ni_{49.5}-Zr₁₀)₉₀-Nb₁₀ | balance | 44.6 | 9.0 | 10 | 1.02 | Over 60 | 41 | 109 |
| | 20 | (Ti-Ni_{49.5}-Zr₂₀)₉₀-Nb₁₀ | balance | 44.6 | 18.0 | 10 | 1.02 | 38 | 182 | 236 |
| | 21 | (Ti-Ni_{49.5}-Zr₂₅)₉₀-Nb₁₀ | balance | 44.6 | 22.5 | 10 | 1.02 | 28 | 325 | 408 |
| | 22 | (Ti-Ni_{49.5}-Zr₂₅)₇₀-Nb₃₀ | balance | 34.7 | 17.5 | 30 | 1.02 | Over 60 | 450 | 580 |
| | 23 | (Ti-Ni_{49.5}-Zr₇)₉₇-Nb₃ | balance | 48.0 | 6.8 | 3 | 1.02 | Over 60 | 41 | 102 |
| Comparative example | 24 | (Ti-Ni_{49.5}-Zr₃₀)₉₀-Nb₁₀ | balance | 44.6 | 27.0 | 10 | 1.02 | 5 | - | - |
| | 25 | (Ti-Ni_{49.5}-Zr₂₀)₅₀-Nb₅₀ | balance | 24.8 | 10.0 | 50 | 1.02 | Over 60 - | | - |
| | 26 | (Ti-Ni_{49.5}-Zr₅)₉₀-Nb₁₀ | balance | 44.6 | 4.5 | 10 | 1.02 | Over 60 | 5 | 75 |

As embodiments and comparative examples of the present invention, the composition of quaternary Ti-Ni-Hf-Nb alloys and quinary Ti-Ni-Zr-Hf-Nb Nos. 27 to 37, along with the mol ratio of Ti plus Zr and Hf to Ni, break rolling ratio (%), martensite peak transformation temperature (M*,°C) and peak reverse transformation temperature (A*,°C) is given respectively in Table 6.

Furthermore, alloys No. 28 and 29 correspond to alloys 9 and 10 respectively in which Zr is substituted by Hf,and alloy No. 30 corresponds to alloy 20 in which Zr is substituted by Hf; besides, alloy No. 31 corresponds to alloy No. 7 in which Zr is substituted by Hf, and alloy No. 32 corresponds to alloy No. 19 in which half of Zr content (10mol%) is substituted by Hf. In other words, the total content of Zr and Hf (transformation temperature increasing additive elements) is 9mo%1 in alloy No. 32 and 12mol% in alloy No. 33 respectively.

**Table 6. Machinability of Ti-Ni-Zr-Nb alloys and transformation temperature**

| | No. | composition | Content(mol%) | | | | | (Ti+Zr+ Hf)/Ni | Break rolling ratio(%) | transformation temperature | |
|---|---|---|---|---|---|---|---|---|---|---|---|
| | | | Ti | Ni | Zr | Hf | Nb | | | M* | A* |
| Embodiment | 27 | (Ti-Ni_{49.5}-Hf₇)₉₇-Nb₃ | balance | 48.0 | | 6.8 | 3 | 1.02 | Over 60 | 75 | 125 |
| | 28 | (Ti-Ni_{49.5}-Hf₁₅)₉₀-Nb₁₀ | balance | 44.6 | - | 13.5 | 10 | 1.02 | Over 60 | 152 | 206 |
| | 29 | (Ti-Ni_{49.5}-Hf₁₅)₈₀-Nb₂₀ | balance | 39.6 | - | 12 | 20 | 1.02 | Over 60 | 95 | 158 |
| | 30 | (Ti-Ni_{49.5}-Hf₂₀)₉₀-Nb₁₀ | balance | 44.6 | | 18 | 10 | 1.02 | 33 | 193 | 255 |
| | 31 | Ti-Ni_{44.5}-Hf₁₅-Nb₅ | balance | 44.5 | - | 15 | 5 | 1.14 | 48 | 136 | 185 |
| | 32 | (Ti-Ni_{49.5}-Zr₅-Hf₅)₉₀-N b₁₀ | balance | 44.6 | 4.5 | 4.5 | 10 | 1.02 | Over 60 | 52 | 121 |
| | 33 | (Ti-Ni_{49.5}-Zr_{7.5}-Hf_{7.5})₈₀ -Nb₂₀ | balance | 39.6 | 6 | 6 | 20 | 1.02 | Over 60 | 77 | 141 |
| Comparative example | 34 | Ti-Ni_{49.5}-Hf₇ | balance | 49.5 | - | 7 | - | 1.02 | 40 | 94 | 153 |
| | 35 | Ti-Ni_{49.5}-Hf₁₅ | balance | 49.5 | - | 15 | - | 1.02 | 15 | 183 | 228 |
| | 36 | Ti-Ni_{49.5}-Hf₂₀ | balance | 49.5 | - | 20 | - | 1.02 | 10 | 265 | 307 |
| | 37 | Ti-Ni_{49.5}-Zr_{7.5}-Hf_{7.5} | balance | 49.5 | 7.5 | 7.5 | - | 1.02 | 12 | 179 | 223 |

As embodiments the present invention, the composition of quaternary Ti-Ni-Zr-Ta alloys Nos. 38 to 42, along with the mol ratio of Ti plus Zr to Ni, break rolling ratio (%), martensite peak transformation temperature (M*,°C) and peak reverse transformation temperature (A*,°C) is shown respectively in Table 7.

Furthermore, alloys 38-42 are derived by fixing mol ratio of Ti ,Ni and Zr to 40.5mol%, 49.5% and 10mol% respectively, and then substituting Ti, Ni, and Zr as a whole by Ta.

**Table 7. Machinability of Ti-Ni-Zr-Ta alloys and transformation temperature**

| | No. | composition | Component(mol%) | | | | | (Ti+Zr)/Ni | Break rolling ratio(%) | transformation temperature | |
|---|---|---|---|---|---|---|---|---|---|---|---|
| | | | Ti | Ni | Zr | Nb | Ta | | | M* | A* |
| Embodiment | 38 | (Ti-Ni_{49.5}-Zr₁₀)₉₅-Ta₅ | balance | 47.0 | 9.5 | - | 5 | 1.02 | 40 | 97 | 155 |
| | 39 | (Ti-Ni_{49.5}-Zr₁₀)₉₀-Ta₁₀ | balance | 44.6 | 9 | - | 10 | 1.02 | Over 60 | 98 | 156 |
| | 40 | (Ti-Ni_{49.5}-Zr₁₀)₈₅-Nb₁₅ | balance | 42.1 | 8.5 | - | 15 | 1.02 | Over 60 | 98 | 161 |
| | 41 | (Ti-Ni_{49.5}-Zr₁₀)₈₀-Ta₂₀ | balance | 39.6 | 8 | - | 20 | 1.02 | Over 60 | 111 | 171 |
| | 42 | (Ti-Ni_{49.5}-Zr₁₀)₇₀-Ta₃₀ | balance | 34.7 | 7 | - | 30 | 1.02 | Over 60 | 117 | 175 |

As embodiments of the present invention, the composition of quaternary Ti-Ni-Zr-Ta alloys and quinary Ti-Ni-Zr-Nb-Ta Nos. 43 to 48, along with the mol ratio of Ti plus Zr to Ni, break rolling ratio (%), martensite peak transformation temperature (M*,°C) and peak reverse transformation temperature (A*,°C) is shown respectively in Table 8.

Furthermore, the total content of Nb and Ta (machinability improving additive elements) is 10mol% in alloy No. 48.

**Table 8. Machinability of Ti-Ni-Zr-Ta-(Nb) alloys and transformation temperature**

| | No. | composition | Content(mol%) | | | | | (Ti+Zr)/Ni | Break rolling ratio(%) | transformation temperature | |
|---|---|---|---|---|---|---|---|---|---|---|---|
| | | | Ti | Ni | Zr | Nb | Ta | | | M* | A* |
| Embodiment | 43 | (Ti-Ni_{49.5}-Zr₁₅)₉₅-Ta₅ | balance | 47.0 | 14.3 | - | 5 | 1.02 | 15 | 180 | 229 |
| | 44 | (Ti-Ni_{49.5}-Zr₁₅)₉₀-Ta₁₀ | balance | 44.6 | 13.5 | - | 10 | 1.02 | 23 | 165 | 219 |
| | 45 | (Ti-Ni_{49.5}-Zr₁₅)₈₅-Ta₁₅ | balance | 42.1 | 12.8 | - | 15 | 1.02 | 30 | 169 | 224 |
| | 46 | (Ti-Ni_{49.5}-Zr₁₅)₈₀-Ta₂₀ | balance | 39.6 | 12.0 | - | 20 | 1.02 | Over 60 | 179 | 231 |
| | 47 | (Ti-Ni_{49.5}-Zr₂₅)₈₀-Ta₂₀ | balance | 39.6 | 20.0 - | | 20 | 1.02 | 45 | 327 | 412 |
| | 48 | (Ti-Ni_{49.5}-Zr₁₅)₉₀-Nb₅-Ta₅ | balance | 44.6 | 13.5 | 5 | 5 | 1.02 | 40 | 142 | 203 |

As embodiments and comparative examples of the present invention, the composition of quinary Ti-Ni-Zr-Nb-B alloys Nos. 49 to 52, along with the mol ratio of Ti plus Zr to Ni, break rolling ratio (%), martensite peak transformation temperature (M*,°C) and peak reverse transformation temperature (A*,°C) are shown respectively in Table 9.

Furthermore, alloys No. 49 to 52 are derived by adding element B (Baron) into Ti-Ni-Zr-Nb based alloys.

**Table 9. Machinability of Ti-Ni-Zr-Nb-B alloys and transformation temperature**

| | No. | composition | Content(mol%) | | | | | (Ti+Zr)/Ni | Break rolling ratio(%) | transformation temperature | |
|---|---|---|---|---|---|---|---|---|---|---|---|
| | | | Ti | Ni | Zr | Nb | B | | | M* | A* |
| Embodiment | 49 | (Ti-Ni_{49.5}-Zr₁₅)_{94.8}-Nb₅-B_{0.2} | balance | 46.9 | 14.2 | 5 | 0.2 | 1.02 | 40 | 140 | 185 |
| | 50 | (Ti-Ni_{49.5}-Zr₁₅)₉₃-Nb₅-B₂ | balance | 46.0 | 14.0 | 5 | 2 | 1.02 | 36 | 144 | 191 |
| | 51 | (Ti-Ni_{49.5}-Zr₂₀)_{89.5}-Nb₁₀-B_{0.5} | balance | 44.3 | 17.9 | 10 | 0.5 | 1.02 | 40 | 217 | 271 |
| Comparativ e example | 52 | (Ti-Ni_{49.5}-Zr₁₅)₉₂-Nb₅-B₃ | balance | 45.5 | 13.8 | 5 | 3 | 1.02 | 20 | 135 | 179 |

As embodiments of the present invention, the composition of Ti-Ni-Zr-Hf-Nb-Ta-B based multicomponent alloys No. 53 to 55, along with the mol ratio of Ti plus Zr and Hf to Ni, break rolling ratio (%), martensite peak transformation temperature (M*,°C) and peak reverse transformation temperature (A*,°C), is shown in Table 10.

**Table 10. Machinability of Ti-Ni-Zr-Hf-Nb-Ta-B alloys and transformation temperature**

| | No. | composition | Content(mol%) | | | | | | | (Ti+ Zr+H f)/Ni | Break rolling ratio(%) | Transformation temperature | |
|---|---|---|---|---|---|---|---|---|---|---|---|---|---|
| | | | Ti | Ni | Zr | Hf | N b | Ta | B | | | M* | A* |
| Embodiment | 53 | (Ti-Ni_{49.5}-Hf_{1 5})₈₅-Nb₅-Ta₁₀ | Balance | 42.1 | - | 12.8 | 5 | 10 | - | 1.02 | Over 60 | 125 | 178 |
| | 54 | (Ti-Ni_{49.5}-Zr_{7. 5}-Hf_{7.5})₉₀-Nb₅ -Ta₅ | Balance | 44.6 | 6.8 | 6.8 | 5 | 5 | - | 1.02 | 45 | 112 | 168 |
| | 55 | (Ti-Ni_{49.5}-Zr_{7. 5}-Hf_{7.5})_{91.5}-N b₅-Ta₃-B_{0.5} | Balance | 45.3 | 6.9 | 6.9 | 5 | 3 | 0.5 | 1.02 | 42 | 118 | 171 |

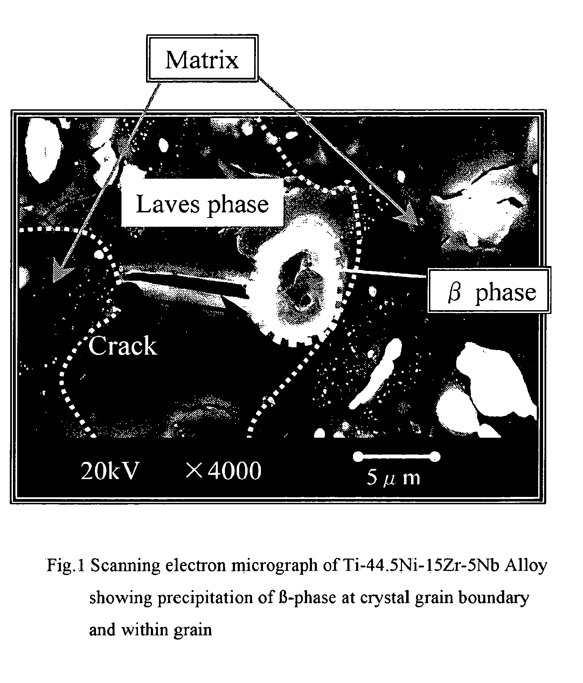

Fig.1 shows a scanning electron microscope image of alloy No. 7 in embodiment of the present invention.

The following conclusion can be drawn from the forgoing description of the experiment result. The relatively low rolling ratio of Ti-Ni-Zr based ternary alloys No. 1 to 4 in comparative examples indicates poor machinability. Besides, the transformation temperature (M* and A*) increases with increasing Zr (Zr, transformation temperature increasing additive) content, however rolling ratio decreases resulting in reduced machinability.

In comparison to the forgoing result, as shown in Table.2, in the case of the quaternary Ti-Ni-Zr-Nb base alloys Nos. 5 to 7 derived from substitution of Ni in alloy No. 3 of the comparative example by Nb (machinability improvement additive element), rolling ratio increases thus machinability improves accordingly. In addition, transformation temperature (M* and A*) in excess of 100°C makes it possible for high temperature operation 100 °C. Particularly, even though the transformation temperature tends to decrease with increasing Nb content, it exhibits a small change in amplitude indicating no drastic drop of transformation temperature occurred.

As a result, with improved machinability, alloys No. 5 to 7 are suitable for high temperature operation as high temperature shape memory alloys. Furthermore, even though with improved break rolling ratio, existence of a large amount of fine cracks are observed in alloys No. 5 to 7. As shown in Fig. 1 of the SEM image by Scanning Electric Microscope, together with the hard brittle Laves phase that forms in alloy No.7 after rolling, soft β phase liable to plastic deformation precipitates which hinders the development of cracks appeared on the interfaces of said Laves phase, as a result, machinability is improved.

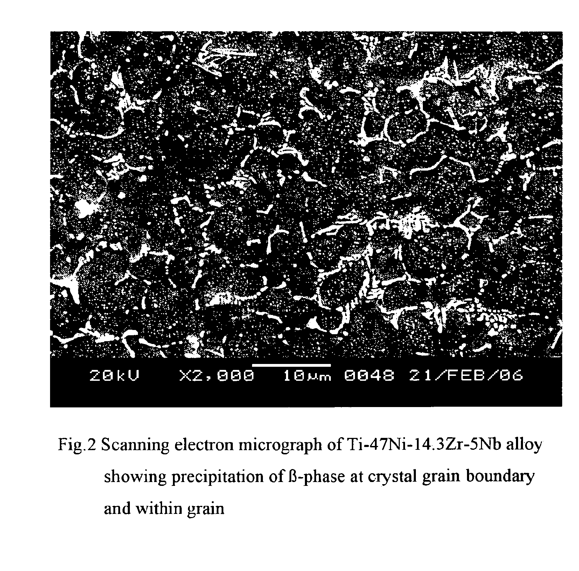

Fig.2 shows a scanning electron microscope image of alloy No. 8 in embodiment of the present invention.

In Table 3, in the case of quaternary Ti-Ni-Zr-Nb alloys Nos. 8 to 12 in embodiment which are derived by fixing the mol ratio of Ti-Ni_{49.5}-Zr₁₅ and then substituting Ti, Ni, and Zr as a whole by Nb, high peak reverse transformation temperature (A*) exceeding 100°C and relatively high martensite transformation temperature (A*) are obtained. Moreover, even though no significant improvement on ductility was observed with 1mol% Nb added (alloy No. 11 of comparative example), ductility increases when Nb content is greater than 3mol%; in particular, when Nb content exceeds 10mol%, rolling ratio reached 60% for alloys No. 9 to 11. Furthermore, with respect to alloys No. 8 to 11, compared to alloys No. 5 to 7, machinability was improved while no significant fine crack developed. In the SEM image of Fig. 2, soft β phase precipitated on crystal interfaces as well as within the crystal grains for alloy No.8 after rolling, consequently machinability is improved.

In Tables 1 to 4, in the case of alloys Nos. 13 to 15 and alloy No. 7 when the mol ratio of metallic components to Nickel is about 1, compared with alloys No.3 and 12 while Zr content is 15mol%, ductility increases; however, when the mol ratio of metallic components to Nickel is 0.82 which deviates substantially from the value 1 for alloy No.16, or 1.86 as for alloy No. 17, ductility decreases and machinability is reduced, and at the same time it is identified a drastic drop in transformation temperature (M* and A*)

In Table 5 with respect to alloys No. 18 to 23, even though the content of Zr which is added to increase the transformation temperature (M* and A*) reaches the degree that may reduce machinability, through addition of Nb by 3 to 30 mol%, machinability is able to be improved without reducing transformation temperature. Particularly in the case of alloy No. 22, an extremely high transformation temperature exceeding 400°C is obtained with 60% of extremely high machinability. In alloy No. 24, when the content of added Zr reaches 27%, the test piece broke at merely 5% deformation even with 10mol% Nb added. As shown with alloy No.25, rolling ratio is in excess of 60% when 50mol% Nb was added, which indicates extraordinarily high machinability; however, transformation temperature was not identified. On the other hand, when 4.5mol% Zr was added in the case of alloy No. 26, high machinability of over 60% in rolling ratio was obtained with 10mol% addition of Nb, transformation temperature was lowered to below 100°C.

As shown in Table 6 with respect to alloys No. 27 to 37, in the case of Ti-Ni-Hf based alloys, which possess approximately the same properties as Ti-Ni-Zr based alloys and are also poor in machinability, high temperature shape memory alloys having high transformation temperature with improved machinability are obtained through addition of Nb. Particularly, in the case of alloy No. 27 compared with alloys Nos. 1, 23 and 34, equal or better physical properties (transformation temperature and rolling ratio) are obtained even when Zr is substituted by Hf (transformation temperature increasing additive), same as the case of Zr. Similarly, it can also be seen that equal or better properties (transformation temperature and rolling ratio) are obtained when Zr was substituted by Hf (transformation temperature increasing additive) as we compare alloy No. 28 compare with alloys Nos. 3, 9 and 35, alloy No. 29 with alloys No. 10, alloy No. 30 with alloys Nos. 20 and 36, alloy No. 31 with alloy 7, alloy 32 with alloys Nos. 2 and 19, alloy No. 33 with alloys Nos. 10, 29 and 37, which indicates that by adding Nb the same improvement effect is achieved.

As a result, it is understood that by adding Nb to Ti-Ni-Zr (or Hf) based alloys, high temperature shape memory alloys with high machinability and high transformation temperature are obtained.

As shown in Tables 7 and 8 with respect to alloys Nos. 38 to 48, by adding Ta (machinability improving additive) or the combination of Ta and Nb instead of Nb, to Ti-Ni-Zr based alloys, high temperature shape memory alloys of high machinability with high transformation temperature are obtained. In addition, it shows that with increasing Ta content, rolling ratio increases and transformation temperature increases as well.

In particular, comparing alloys Nos. 38 and 39 with alloys Nos. 18 and 19 in which Nb is added, it can be seen that alloys Nos. 38 and 39 possess higher transformation temperature; besides, as we compare alloys Nos. 43, 44 and 46 with alloys Nos. 8, 9, 10 and 3, even though adding Ta to alloys No. 43, 44 and 46 exhibits little effect to improve rolling ratio compared with adding Nb to alloys Nos. 8 to 10, better rolling ratio and higher transformation temperature were obtained compared respectively with alloy No. 3 and alloys Nos. 8 to 10 with added Nb.

Furthermore, as alloy No. 48 was compared with alloys Nos. 44, 9 and 3, in the case of alloy 48 with combined addition of Ta and Nb, the rolling ratio is improved compared with alloy No. 44 with only Ta added, and yet the transformation temperature is increased compared with alloy No. 9 while only Nb is added.

As shown in Table 9, with respect to alloys Nos. 49 to 52, by adding Nb and further adding B (Boron, temperature increasing and machinability improving additive element), rolling ratio is improved with increased transformation temperature compared with alloys Nos. 8 and 20 while no B is added. In addition, comparing alloys Nos. 49, 50, and 52 with alloy No. 8, it can be seen that the improving effect tends to be weakened with increasing B content, indicating a small amount of B addition is preferable.

A shown in Table 10 with respect to alloys Nos. 53 to 55, by adding Nb, Ta and B to Ti-Ni-Hf or Ti-Ni-Zr-Hf alloys, a transformation temperature exceeding 100°C is obtained and rolling ratio is also improved compared with alloys No. 35 and 37.

In the above description, the preferred exemplary embodiments of the present invention were set forth, it will be understood that the invention is not limited to the specific forms shown, modification may be made without departing from the scope of the present invention as expressed in the claims.

### Industrial application

Since the afore-described shape memory alloy does not lose its shape memory effect during repeated use at high temperature, it can be used as a valve inside gas channel of a motor (engine of automobile, aircrafts, or gas turbine) for high temperature operation, when heated, channel area is regulated with the help of the shape memory effect; when cooled, channel area is reversed back by a spring used for deforming the valve. Besides, it can also be used as lubricant supplying valve of high speed rotating shaft. In addition, it can be used as safety device for power supply of household electric appliance at high temperature operation. Furthermore, it can also be used as an actuator for high temperature operation. In the case of an actuator, it also exhibits improved responsiveness resulting from increased cooling speed.

## Claims

1. A high temperature shape memory alloy, wherein said alloy consists of 34.7mol%-48.5mol% Ni, and at least either Zircon or Hafnium as transformation temperature increasing additive elements, with the sum of which 6.8mol% to 22.5mol%; and at least either Niobium or Tantalum as machinability improving additives, with the sum of which 1mol% to 30mol%; and Boron less than 2 mol%; and Titanium as the balance; and unavoidable impurity.

2. A high temperature shape memory alloy according to claim 1, wherein said alloy consists of 6.8mol% to 22.5mol% Zircon as said transformation temperature increasing additives; and 3mol% to 30mol% Niobium as said machinability improving additives.

3. A high temperature shape memory alloy according to claim 1, wherein said alloy consists of 6.8mol% to 18mol% Hafnium as said transformation temperature increasing additives; and 3mol% to 20mol% Niobium as said machinability improving additives.

4. A high temperature shape memory alloy according to claim 1, wherein said alloy consists of 6.8mol% to 20mol% said transformation temperature increasing additives; and 3mol% to 30mol% Tantalum as said machinability improving additives.

5. A high temperature shape memory alloy according to claims 1 to 4, wherein the mol ratio of Titanium plus Zircon and Hafnium to Nickel is in the range of 0.98 to 1.14.

6. An actuator, wherein the said actuator is made of a high temperature shape memory alloy described in claims 1 to 5.

7. A motor equipped with a flux adjusting valve, wherein the said flux adjusting valve is made of a high temperature shape memory alloy described in claims 1 to 5.

## Patentansprüche

1. Hochtemperatur-Formgedächtnislegierung, wobei die Legierung aus 34,7 Mol-% bis 48,5 Mol-% Ni und zumindest entweder Zirconium oder Hafnium als die Umwandlungstemperatur erhöhende Additivelemente, deren Summe 6,8 Mol-% bis 22,5 Mol-% beträgt, und zumindest entweder Niob oder Tantal als die Bearbeitbarkeit verbessernde Additive, deren Summe 1 Mol-% bis 30 Mol-% beträgt, und Bor in einer Menge von weniger als 2 Mol-% und Titan als Rest und unvermeidbaren Verunreinigungen besteht.

2. Hochtemperatur-Formgedächtnislegierung nach Anspruch 1, wobei die Legierung aus 6,8 Mol-% bis 22,5 Mol-% Zirconium als das die Umwandlungstemperatur erhöhende Additiv und 3 Mol-% bis 30 Mol-% Niob als das die Bearbeitbarkeit verbessernde Additiv besteht.

3. Hochtemperatur-Formgedächtnislegierung nach Anspruch 1, wobei die Legierung aus 6,8 Mol-% bis 18 Mol-% Hafnium als das die Umwandlungstemperatur erhöhende Additiv und 3 Mol-% bis 20 Mol-% Niob als das die Bearbeitbarkeit verbessernde Additiv besteht.

4. Hochtemperatur-Formgedächtnislegierung nach Anspruch 1, wobei die Legierung aus 6,8 Mol-% bis 20 Mol-% der die Umwandlungstemperatur erhöhenden Additive und 3 Mol-% bis 30 Mol-% Tantal als das die Bearbeitbarkeit verbessernde Additiv besteht.

5. Hochtemperatur-Formgedächtnislegierung nach Anspruch 1 bis 4, wobei das Molverhältnis des Titans plus Zirconium und Hafnium zum Nickel im Bereich von 0,98 bis 1,14 liegt.

6. Stellglied, wobei das Stellglied aus einer Hochtemperatur-Formgedächtnislegierung nach Anspruch 1 bis 5 hergestellt ist.

7. Motor, der mit einem den Durchfluss einstellenden Ventil ausgerüstet ist, wobei das den Durchfluss einstellende Ventil aus einer Hochtemperatur-Formgedächtnislegierung nach Anspruch 1 bis 5 hergestellt ist.

## Revendications

1. Alliage à mémoire de forme à haute température, ledit alliage étant constitué de 34,7 % en mol à 48,5 % en mol de Ni, d'au moins soit du zircon soit de l'hafnium en tant qu'additifs augmentant la température de transformation, dont la somme s'élève à 6,8 % en mol à 22,5 % en mol ; d'au moins soit du niobium soit du tantale en tant qu'additifs améliorant l'usinabilité, dont la somme s'élève à 1 % en mol à 30 % en mol ; du bore dans une quantité inférieure à 2 % en mol ; du titane pour le reste ; et des impuretés inévitables.

2. Alliage à mémoire de forme à haute température selon la revendication 1, ledit alliage étant constitué de 6,8 % en mol à 22,5 % de zircon en tant qu'additif augmentant la température de transformation ; et de 3 % en mol à 30 % en mol de niobium en tant qu'additif améliorant l'usinabilité.

3. Alliage à mémoire de forme à haute température selon la revendication 1, ledit alliage étant constitué de 6,8 % en mol à 18 % d'hafnium en tant qu'additif augmentant la température de transformation ; et de 3 % en mol à 20 % en mol de niobium en tant qu'additif améliorant l'usinabilité.

4. Alliage à mémoire de forme à haute température selon la revendication 1, ledit alliage étant constitué de 6,8 % en mol à 20 % desdits additifs augmentant la température de transformation ; et de 3 % en mol à 30 % en mol de tantale en tant qu'additif améliorant l'usinabilité.

5. Alliage à mémoire de forme à haute température selon les revendications 1 à 4, dans lequel le rapport molaire du titane associé au zircon et de l'hafnium associé au nickel se situe dans la gamme allant de 0,98 à 1,14.

6. Actionneur, lequel actionneur est constitué d'un alliage à mémoire de forme à haute température décrit dans les revendications 1 à 5.

7. Moteur équipé d'une soupape de régulation de l'écoulement, dans lequel la soupape de régulation de l'écoulement est constituée d'un alliage à mémoire de forme à haute température décrit dans les revendications 1 à 5.
